Europäisches Patentamt

European Patent Office

Office européen des brevets

(19)

(11) Veröffentlichungsnummer : **0 330 607 B1**

# (12) EUROPÄISCHE PATENTSCHRIFT

(45) Veröffentlichungstag der Patentschrift :
**23.12.92 Patentblatt 92/52**

(51) Int. Cl.$^5$ : **A61C 13/265**, A61C 13/00

(21) Anmeldenummer : **89810040.9**

(22) Anmeldetag : **17.01.89**

(54) **Verfahren zur Herstellung einer lösbaren Verbindung zwischen einer abnehmbaren Zahnprothese und dem fest sitzenden Zahnersatz und Hilfsteile zur Durchführung des Verfahrens.**

(30) Priorität : **24.02.88 CH 680/88**

(43) Veröffentlichungstag der Anmeldung :
**30.08.89 Patentblatt 89/35**

(45) Bekanntmachung des Hinweises auf die
Patenterteilung :
**23.12.92 Patentblatt 92/52**

(84) Benannte Vertragsstaaten :
**BE CH DE IT LI**

(56) Entgegenhaltungen :
**EP-A- 0 085 781**
**WO-A-85/01872**
**US-A- 4 579 709**

(73) Patentinhaber : **CENDRES ET METAUX S.A.**
**122, route de Boujean**
**CH-2501 Bienne (CH)**

(72) Erfinder : **Hahn, Rolf, Dr.**
**Jardillets 35**
**CH-2068 Hauterive (CH)**
Erfinder : **Wermuth, Walter**
**Rue Dufour 60**
**CH-2501 Bienne (CH)**

(74) Vertreter : **Seehof, Michel et al**
**c/o AMMANN PATENTANWAELTE AG BERN**
**Schwarztorstrasse 31**
**CH-3001 Bern (CH)**

EP 0 330 607 B1

**Beschreibung**

Die vorliegende Erfindung bezieht sich auf ein Verfahren zur Herstellung einer lösbaren Verbindung gemäss Oberbegriff von Patentanspruch 1. Die Zahngeschiebverbindung nach der EP-B-0085781 ist nach einem derartigen Verfahren hergestellt worden. Während das im dortigen Patent im Vordergrund stehende Merkmal, das einstückige Herstellen der Modellgussprothese und des Gehäuses, gegenüber dem damals bekannten Stand der Technik Vorteile bringt, weist das in dieser Patentschrift beschriebene Verfahren auch Nachteile auf. Beim Giessen des Gehäuses für die Aufnahme des Retentionsteils der Patrize erreicht man nicht immer die für eine Prothese notwendige Präzision. Insbesondere bei bilateralen Freiendsätteln kommt es daher in der Regel vor, dass die im Gehäuse befestigte Patrize nicht passend in die Matrize im Mund des Patienten eingeführt werden kann. Man muss dann die fehlende Passgenauigkeit durch Feilen, Fräsen oder elektrolytischem Polieren notdürftig ausgleichen.

In der WO-85/01872 ist eine Anordnung zum Verbinden von Zahnersatzteilen durch Klebung beschrieben. Kern der Anordnung ist ein Zwischenraum zwischen einem Retentionsgehäuse und einer Patrize, d.h. zwei zueinander passenden Verbindungselementen, wobei der Zwischenraum durch ein besonders geformtes, zeitweiliges Zwischenraum-Modellteil erzeugt wird, das beim Formen auf die Patrize aufgesteckt wird. Zudem muss der Zwischenraum hinterschnittene Flächenanteile besitzen.

Es ist demgegenüber Aufgabe der vorliegenden Erfindung, ein verbessertes Verfahren zur Herstellung einer lösbaren Verbindung anzugeben, das eine beliebig grosse Passgenauigkeit ermöglicht und insbesondere die durch den Herstellungsprozess bedingten Fehler respektive die durch das Schrumpfen der Metallteile verursachten Ungenauigkeiten auszugleichen. Ein Verfahren, das diese Aufgabe löst, ist in den Patentansprüchen 1-3 definiert.

Die Erfindung wird im folgenden anhand einer Zeichnung von Ausführungsbeispielen näher erläutert.

Fig. 1 und 2 zeigen zwei wesentliche Teile zur Durchführung des erfindungsgemässen Verfahrens,

Figur 3 zeigt das Teil der Fig. 2 mit einem Formteil für die Wandung des Retentionsgehäuses,

Figur 4 zeigt in perspektivischer Sicht das Modell,

Figur 5 zeigt das gegossene Modellgussgehäuse mit dem Retentionsgehäuse, und

Fig. 6 und 7 zeigen zwei Ausführungsvarianten der lösbaren Verbindung ohne und mit einem Umlauf.

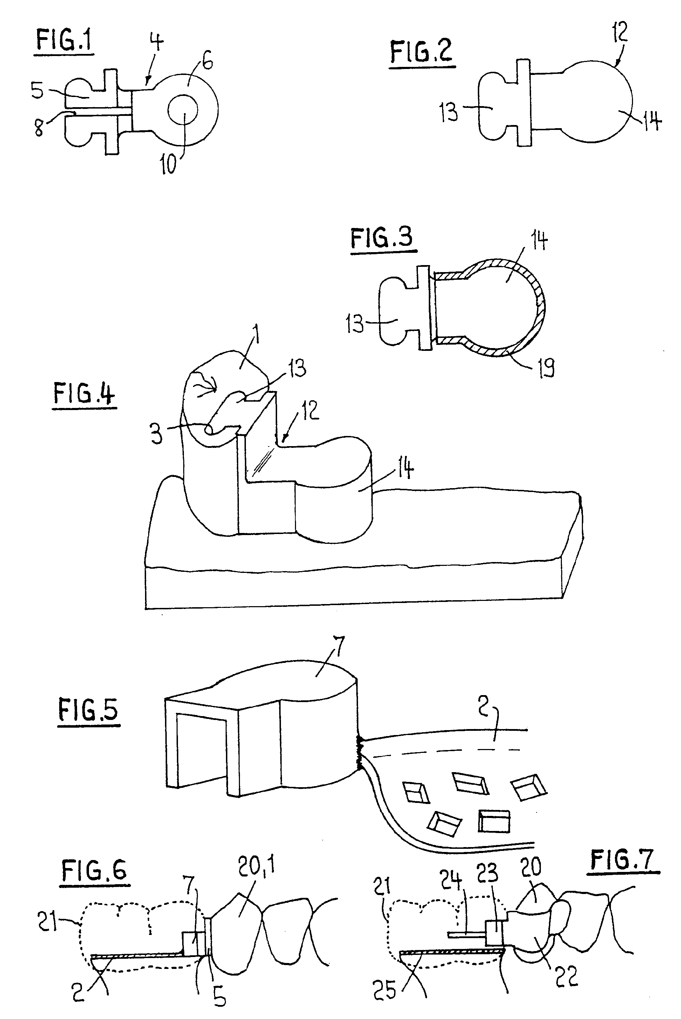

Bei der Herstellung einer lösbaren Verbindung zwischen einer Krone 1 (siehe Figur 4) und einer Modellgussprothese 2 (siehe Figur 5) wird zuerst in bekannter Weise die Matrize 3 geformt, indem diese in der Krone 1 des Ankerzahnes durch einen als Patrize ausgebildeten und aus Keramik bestehenden Matrizenformer (nicht dargestellt) geformt wird. Dabei wird der Matrizenformer in eine entsprechende Wachskrone (nicht gezeigt) einmodelliert, um einen entsprechenden Hohlraum zur Aufnahme einer Patrize zu bilden. Mittels bekannter Technik wird dann die Krone 1 erstellt, mit einer dem Matrizenformer entsprechenden Matrize 3.

Die an der fertigen Geschiebeverbindung zu verwendende Patrize 4 (siehe Figur 1) besteht im wesentlichen aus einem der Matrize 3 entsprechenden Gleitteil 5 und einem Retentionsteil 6, das der Verbindung mit dem Retentionsgehäuse 7 (Figur 5) dient. Das Gleitteil 5 der Patrize weist einen durchgehenden Aktivierungsschlitz 8 auf, der sich längs der Symmetrieachse der Patrize erstreckt.

Der nächste Schritt, die Herstellung des Duplikatmodelles, ist insofern der wichtigste Schritt, als er für die Passgenauigkeit der fertigen Geschiebeteile massgebend ist. Gemäss vorbekannten Verfahren, auch gemäss der oben angegebenen europäischen Patentschrift, wird zur Herstellung des den Retentionsteil der Patrize umfassenden Retentionsgehäuses ein Gehäuseformer aus Keramik verwendet, der genau die Form der endgültigen Patrize aufweist, so dass dessen Lage bezüglich des Ankerzahnes absolut präzis sein sollte, damit beim Einschieben der Patrize die gewünschte Genauigkeit beim Eingliedern der Prothese gewährleistet ist. Dies ist jedoch, wie bereits eingangs erwähnt wurde, infolge der Ungenauigkeit des Modellgusses oft nicht möglich. Es wird nun mit dem erfindungsgemässen Verfahren zwischen dem Retentionsteil 6 der Patrize und dem Retentionsgehäuse 7 ein Spiel geschaffen, um Ungenauigkeiten beim Modellguss oder eventuell leichte Lageveränderungen des Ankerzahnes ausgleichen zu können. Die Grösse des Spieles kann den Umständen angepasst werden.

Es sind verschiedene Vorgehensweisen und Hilfsteile denkbar, um dieses Spiel zu bewerkstelligen. Erfindungsgemäss wird nun statt der eigentlichen Patrize ein Dublierhilfsteil 12 gemäss Figur 2 aus Kunststoff verwendet, mit einem der Matrize 3 entsprechenden Gleitteil 13 und einem Retentionsteil 14, dessen Aussenabmessungen grösser als diejenigen des Retentionsteiles der Patrize 4 sind.

Wie aus der vorgehenden Beschreibung hervorgeht, weist das Retentionsteil 14 am ersten Dublierhilfsteil 12 die gleichen Aussenabmessungen auf, die es gestatten, das Duplikatmodell damit fertigzustellen. Um beim Modellieren eine geringe und gleichmässige Dicke zu erzielen, ist es vorteilhaft, als weiteren Hilfsteil ein Gehäuse 19 zu verwenden, wie es in Figur 3 gezeigt ist. Dieses Gehäuse besteht aus rückstandslos verbrennbarem Kunststoff oder aus Wachs. Dabei kann das Gehäuse 19 direkt zum Formen des Retentionsgehäuses 7 auf dem Duplikatmodell als Modellierhilfe verwendet werden, oder es kann das Gehäuse 19 zuerst bei der Herstellung des Duplikatmodelles auf das Dublierhilfsteil 12 aufgesetzt und als Transfer eingesetzt und anschliessend als Modellierhilfe für das Retentionsgehäuse 7 verwendet werden.

Nach der Herstellung des Duplikatmodelles wird das Retentionsgehäuse an das Modellgussgerüst modelliert und mit dem Modellgussgerüst einstückig gegossen. Anschliessend wird das Retentionsteil 6 der eigentlichen Patrize 4 im Retentionsgehäuse 7 befestigt. Infolge des durch das dickere Retentionsteil 14 am ersten Dublierhilfsteil geschaffenen Freiraumes kann das Modellgussgerüst, respektive das Retentionsgehäuse, in Bezug auf den Gleitteil der Patrize optimal ausgerichtet werden, und man kann anschliessend das Retentionsteil 6 der eigentlichen Patrize 4 mittels Klebstoff im Retentionsgehäuse 7 befestigen. Die optimale Passung zwischen festsitzendem Zahnersatz und abnehmbarer Prothese kann sowohl auf dem Meistermodell als auch im Munde des Patienten erfolgen.

Für die Herstellung des Dublierhilfsteiles 12 wurde in der Beschreibung als Material Kunststoff erwähnt, doch beschränkt sich die Erfindung keineswegs auf dieses Material. Für diese Teile können auch ein geeignetes Metall oder Keramik verwendet werden.

Das bis jetzt beschriebene Verfahren, insbesondere die letzten Schritte des Giessens des Retentionsgehäuses mit dem Modellgussgerüst, wurde für den Fall geschildert, dass ein Umlauf nicht gewünscht oder erforderlich ist, so wie es in Figur 6 dargestellt wurde. Dort erkennt man schematisch den Ankerzahn 20, das Gleitteil 5 der Patrize 4 sowie das Retentionsgehäuse 7 mit dem Modellgussgerüst 2 und darüber angedeutet die fertig polymerisierte Prothese 21.

Im Falle, dass ein Umlauf erwünscht oder erforderlich ist, wird gemäss Figur 7 vorgegangen. Dabei wird der Umlauf 22, der den Ankerzahn 20 umfasst, mit dem Retentionsgehäuse 23 und dem Verankerungsteil 24 einstückig hergestellt beziehungsweise gegossen und mit dem separaten Modellgussgerüst 25 während der Polymerisation verbunden. Der Umlauf wird insbesondere bei intrakoronalen Geschieben aus Stabilisierungsgründen verwendet.

**Patentansprüche**

1.   Verfahren zur Herstellung einer lösbaren Verbindung zwischen einer abnehmbaren Zahnprothese (21) und dem festsitzenden Teil der Restauration, wobei in der Krone (1) eines Ankerzahnes (20) mittels eines Matrizenformers eine Matrize (3) geformt und anschliessend ein Duplikatmodell der Patrize (4) mit Retentionsteil hergestellt wird, wobei auf diesem die Modellgussprothese (2) mit dem Retentionsgehäuse (7) geformt und gegossen und mit dem Retentionsteil (6) der Patrize (4) verbunden wird, dadurch gekennzeichnet, dass zum Formen des Duplikatmodelles der Patrize ein Hilfsteil (12) in Form einer Patrize verwendet wird, dessen Retentionsteil (14) grössere Aussenabmessungen als diejenigen des Retentionsteiles (6) der definitiv einzubauenden Patrize (4) aufweist, wodurch zwischen dem Retentionsteil (6) der Patrize und dem Inneren des Retentionsgehäuses (7) ein Spiel erzeugt wird, und dass das Hilfsteil (12) bei der Herstellung des Duplikatmodelles der Patrize (4) in der Matrize (3) der Krone (1) steckt.

2.   Verfahren nach Anspruch 1, dadurch gekennzeichnet, dass zum direkten Formen des Retentionsgehäuses (7) auf dem Duplikatmodell als Modellhilfe ein Gehäuse (19) aus rückstandlos verbrennbarem Werkstoff verwendet wird, oder dass dieses Gehäuse (19) zuerst bei der Herstellung des Duplikatmodelles auf das Retentionsteil (14) des Hilfsteiles (12) aufgesetzt und als Transfer eingesetzt und anschliessend als Modellierhilfe für das Retentionsgehäuse (7) verwendet wird.

3.   Verfahren nach Anspruch 1 oder 2, dadurch gekennzeichnet, dass ein Umlauf (22) einstückig mit dem Retentionsgehäuse (23), das das Verankerungsteil (24) der Patrize aufnimmt, geformt und gegossen wird und während der Polymerisation der abnehmbaren Prothese (21) mit einem separaten Modellgussgerüst (25) verbunden wird.

4.   Dublierhilfsteil (12) und Patrize (4) zur Durchführung des Verfahrens nach Anspruch 1, wobei sowohl das Dublierhilfsteil (12) als auch die Patrize (4) ein angeformtes Retentionsteil (14; 6) aufweisen, dadurch gekennzeichnet, dass die Aussenabmessungen des Retentionsteils (14) des Dublierhilfsteils (12) grösser sind als diejenigen des Retentionsteiles (6) der definitiv einzubauenden Patrize (4).

5.   Dublierhilfsteil (12) und Gehäuse (19) zur Durchführung des Verfahrens nach Anspruch 2, dadurch gekennzeichnet, dass das Gehäuse (19) aus rückstandlos verbrennbarem Werkstoff besteht und Innenabmessungen aufweist, die den Aussenabmessungen des Retentionsteils (14) des Dublierhilfsteiles (12) entsprechen.

## Claims

1. Process of fabrication of a detachable connection between a removable dental prosthesis (21) and the fixed part of the restoration, a matrix (3) being formed in the crown (1) of an anchoring tooth (20) by means of a matrix former and then a duplicate model of the male mould (4) with a retention part is fabricated on which is formed and casted the casting model of the prosthesis (2) comprising the retention housing (7) which is connected to the retention part (6) of the male mould (4), characterized in that for forming the duplicate model of the male mould, an auxiliary part (12) in form of a male mould is used, the retention part (14) of which being of external dimensions greater than the ones of the retention part (6) of the male mould (4) to be definitely mounted, so that a play is created between the retention part (6) of the male mould and the inside of the retention housing (7), and in that the auxiliary part (12) is fixed in the matrix (3) of the crown (1) during the fabrication of the duplicate model of the male mould (4)

2. Process according to claim 1, characterized in that for forming directly the retention housing (7) on the duplicate model, a housing (19) of combustible material without residues is used as an auxiliary model or in that the housing (19) is placed first on the retention part (14) of the auxiliary part (12) during the fabrication of the duplicate model and is utilized as a transfer and subsequently as a moulding auxiliary for the retention housing (7).

3. Process according to claim 1 or 2, characterized in that a framework (22) is formed and casted in one piece with the retention housing (23) which receives the anchoring part (24) and in that during the polymerisation of the removable prosthesis (21) it is connected to a separated model moulding framing.

4. Auxiliary doubling part (12) and male mould (4) for the realization of the process according to claim 1, the auxiliary doubling part (12) as well as the male mould (4) having a shaped retention part (14;6), characterized in that the external dimensions of the retention part (14) of the auxiliary doubling part (12) are greater than the ones of the retention part (6) of the male mould (4) to be definitely mounted.

5. Auxilairy doubling part (12) and housing (19) for the realization of the process according to claim 2, characterized in that the housing (19) consists of a combustible material without residues and is of internal dimensions corresponding to the external dimensions of the retention part (14) of the auxiliary doubling part (12).

## Revendications

1. Procédé de fabrication d'une connection amovible entre une prothèse dentaire séparable (21) et la partie fixée de la restauration, une matrice (3) étant formée dans la couronne (1) d'une dent d'ancrage (20) à l'aide d'un formeur de matrice, et ensuite un modèle duplicatif du poinçon (4) comportant une partie de rétention est fabriqué sur laquelle est formé et coulé le modèle de coulée de la prothèse (2) avec le bôitier de rétention (7) qui est lié avec la partie de rétention (6) du poinçon (4), caractérisé en ce que, pour former le modèle duplicatif du poinçon, une pièce auxiliaire (12) en forme de poinçon est utilisée, dont la partie de rétention (14) est de dimensions extérieures plus grandes que celles de la partie de rétention (6) du poinçon (4) à monter définitivement, de sorte qu'un jeu est créé entre la partie de rétention (6) du poinçon et l'intérieur du boîtier de rétention (7), et en ce que la pièce auxiliaire (12) est fixée dans la matrice (3) de la couronne (1), lors de la fabrication du modèle duplicatif du poinçon (4).

2. Procédé selon la revendication 1, caractérisé en ce que, pour former directement le boîtier de rétention (7) sur le modèle duplicatif, on utilise comme aide modèle un boîtier (19) en matériau combustible sans résidus ou en ce que le boîtier (19) est placé d'abord sur la partie de rétention (14) de la pièce auxiliaire (12) lors de la fabrication du modèle duplicatif, et est utilisé comme transfert et subséquemment comme aide de moulage pour le boîtier de rétention (7).

3. Procédé selon la revendication 1 ou 2, caractérisé en ce qu'un entourage (22) est formé et coulé d'une pièce avec le boîtier de rétention (23) qui reçoit la partie d'ancrage (24), et en ce que pendant la polymérisation de la prothèse séparable (21) il est relié avec un chevalet de moulage de modèle séparé.

4. Pièce auxiliaire de doublage (12) et poinçon (4) pour la mise en oeuvre du procédé selon la revendication 1, la pièce auxiliaire de doublage (12) ainsi que le poinçon (4) ayant une partie de rétention (14;6) intégralement formée, caractérisée en ce que les dimensions extérieures de la partie de rétention (14) de la pièce auxiliaire de doublage (12) sont plus grandes que celles de la partie de rétention (6) du poinçon à monter définitivement (4).

5. Pièce auxiliaire de doublage (12) et boîtier (19) pour la mise en oeuvre du procédé selon la revendication 2, caractérisée en ce que le boîtier (19) consiste en matériau combustible sans résidus et est de dimensions intérieures qui correspondent aux dimensions extérieures de la partie de rétention (14) de la pièce auxiliaire de doublage (12).

FIG.1

FIG.2

FIG.3

FIG.4

FIG.5

FIG.6

FIG.7